# FASCICULE DE BREVET EUROPEEN

(11) **EP 1 145 688 B1**
(45) Date de publication et mention de la délivrance du brevet: **18.08.2004**
(21) Numéro de dépôt: 00201337.3
(22) Date de dépôt: 14.04.2000
(51) Int. Cl.: A61C 1/18

(54) **Raccord tournant à connexion rapide pour relier un instrument dentaire à une source d'alimentation**
Schnellanschlussdrehkupplung zum Verbinden eines zahnärztlichen Werkzeugs mit einer Versorgungsquelle
Quick connect swivel coupling for connecting a dental tool to a power supply

(43) Date de publication de la demande: 17.10.2001
(73) Titulaire: Bien-Air Holding SA, CH-2504 Bienne (CH)
(72) Inventeur: Mosimann, Vincent, 2520 La Neuveville (CH)
(74) Mandataire: Laurent, Jean

(56) Documents cités:
- WO-A-98/29052
- US-A- 4 534 734

## Description

La présente invention concerne un raccord tournant à connexion rapide pour relier un instrument dentaire à une source d'alimentation, ledit raccord comportant :
- un tuyau apte à être raccordé à la source d'alimentation et comportant des conducteurs électriques et au moins un conduit de fluide,
- une partie fixe ayant une extrémité arrière raccordée au tuyau et une extrémité avant pourvue d'un groupe de bagues de contact électrique raccordées aux dits conducteurs, lesdites bagues étant apparentes sur une surface périphérique de la partie fixe pour permettre une liaison électrique par contact tournant avec l'instrument, ladite partie fixe étant traversée par un ensemble de canaux pour faire communiquer le ou chaque conduit de fluide du tuyau avec l'instrument, et
- une partie rotative tournant librement autour de la partie fixe et comportant un manchon d'accouplement pourvu d'un dispositif de couplage mécanique destiné à coopérer avec l'instrument.

Dans les installations dentaires classiques, les raccords de ce genre sont utilisés pour raccorder des instruments dentaires, tels des pièces à main à turbine, à moteur électrique, à source de lumière ou d'autres types, à un bloc fixe d'alimentation et de commande comprenant une ou plusieurs sources d'alimentation en fluides, une source d'alimentation électrique et des circuits électriques de commande. On tend de plus en plus à donner à ces raccords un caractère polyvalent, permettant de connecter successivement différents types d'instruments dentaires sur un même raccord.

La demande internationale WO 98/29052 décrit un raccord tournant appelé attachement, qui présente les caractéristiques indiquées en préambule ci-dessus et comprend en outre un raccord supplémentaire interchangeable, emboîté de manière rotative sur la partie fixe. Ce raccord supplémentaire est destiné à s'ajuster contre l'extrémité arrière d'un instrument dentaire et présente pour cela une face frontale qui correspond spécifiquement à la configuration de la face arrière de l'instrument. Le raccord supplémentaire est retenu axialement et de manière rotative sur la partie fixe au moyen d'une bague d'arrêt rotative vissée sur lui. L'instrument lui-même est retenu axialement au moyen du manchon d'accouplement qui prend appui sur le raccord supplémentaire et se visse sur l'extrémité arrière de l'instrument. Lorsque ce manchon est dévissé, on peut le faire coulisser vers l'arrière par-dessus la partie fixe et le tuyau pour accéder à la bague d'arrêt et actionner celle-ci afin d'échanger au besoin le raccord supplémentaire, s'il s'agit de raccorder un autre instrument ayant une configuration différente.

La présence d'un raccord supplémentaire jouant le rôle d'interface entre la partie fixe du raccord et l'instrument dentaire a pour inconvénient d'augmenter la longueur totale de l'appareil porté par la main du dentiste. Dans ces circonstances, le tuyau flexible raccordé à l'arrière tend à exercer sur cet appareil un couple qui est d'autant plus élevé que l'extrémité arrière de l'appareil est éloignée de la main du dentiste, et ce couple peut affecter la précision des gestes du dentiste. Un des buts de l'invention est donc de créer un raccord tournant polyvalent permettant de réduire autant que possible la longueur de l'ensemble tenu à la main.

Une idée de base de l'invention consiste à agencer le raccord de façon à pouvoir se passer du raccord supplémentaire susmentionné, la partie fixe du raccord étant alors agencée pour s'emboîter directement dans l'extrémité arrière de l'instrument. On utilise ainsi le fait que cette partie fixe constitue un élément polyvalent puisque les contacts électriques et les débouchés de canaux qu'elle présente à l'avant permettent de lui raccorder des instruments tournants ou non, ainsi que des instruments utilisant seulement des fluides, ou seulement de l'énergie ou des signaux électriques, ou les deux. Il suffit en fait que l'extrémité arrière de l'instrument ait une configuration complémentaire à celle de l'extrémité avant du raccord et permettant la rotation de l'un sur l'autre.

Toutefois, ce concept pose deux problèmes particuliers. D'une part, étant donné qu'avec les exigences sanitaires croissantes, les instruments doivent être stérilisés entre chaque patient, leur couplage et découplage sur le raccord doit pouvoir s'effectuer d'une manière très simple et rapide. D'autre part, comme les bagues de contact électrique sont apparentes sur les côtés de la partie avant proéminente du raccord, il est souhaitable de les protéger contre des contacts accidentels avec des corps étrangers, qui pourraient causer des courts-circuits, ou encore salir ou endommager les surfaces de contact électrique.

Ces buts sont atteints par un raccord tournant du type indiqué en préambule, caractérisé en ce que des moyens de butée, permettant au manchon d'accouplement de s'appuyer axialement sur la partie fixe de manière rotative pour tirer en arrière l'instrument contre le raccord, sont interposés entre ledit manchon et ladite partie fixe, et en ce que le manchon d'accouplement s'étend vers l'avant sur une longueur suffisante pour entourer le groupe de bagues de contact et empêcher un contact accidentel entre ces bagues et un objet extérieur lorsque le raccord n'est pas connecté à un instrument.

Grâce à cet agencement, l'opérateur peut connecter un instrument au raccord d'une manière très simple et rapide, en insérant la partie fixe du raccord dans l'arrière de l'instrument et en faisant tourner le manchon d'accouplement pour effectuer le couplage mécanique, réalisé de préférence au moyen d'un dispositif à baïonnette. Les opérations inverses permettent aussi un découplage rapide, ce qui permet un remplacement aisé d'un instrument par un autre. L'ensemble présente en outre les caractéristiques voulues de faible longueur et de protection des pièces de contact électrique, conformément aux buts de l'invention.

D'autres caractéristiques et avantages de l'invention apparaîtront dans la description suivante d'un mode de réalisation préféré, présenté à titre d'exemple non limitatif en référence aux dessins annexés, dans lesquels :
- la figure 1 représente en perspective un raccord tournant couplé à un moteur électrique destiné à actionner une pièce à main dentaire,
- la figure 2 est une vue latérale du raccord tournant,
- la figure 3 est une vue en perspective du raccord tournant, dont on a enlevé certains éléments pour montrer des détails internes,
- la figure 4 est une vue analogue à la figure 3, dans laquelle on a encore enlevé une bague,
- la figure 5 est une vue générale en coupe longitudinale du raccord tournant.
- la figure 6 est une vue analogue à la figure 5, montrant en outre l'extrémité arrière du moteur électrique connecté au raccord tournant.

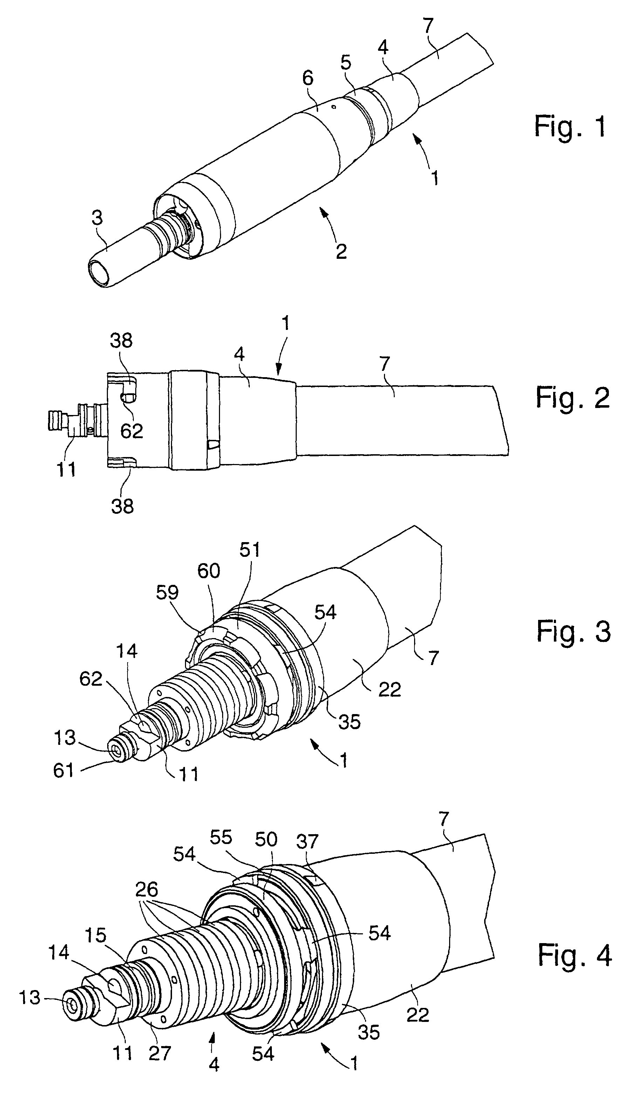

La figure 1 montre un raccord tournant 1 connecté à l'arrière d'un moteur électrique 2 qui constitue un instrument dentaire avec une pièce à main non représentée, s'emboîtant sur l'extrémité avant 3 du moteur 2. Le raccord 1 comporte une partie fixe 4, emboîtée de manière rotative dans l'extrémité arrière du moteur 2, et une partie rotative 5 pourvue d'un dispositif de couplage à baïonnette coopérant avec l'extrémité arrière 6 du moteur électrique 2.

Le raccord 1 comporte en outre un tuyau flexible 7 dont l'extrémité avant est raccordée à la partie fixe 4, tandis que l'autre extrémité (non représentée) est raccordée à un bloc d'alimentation et de commande du genre décrit plus haut. Cet élément connu ne sera pas décrit en détail ici.

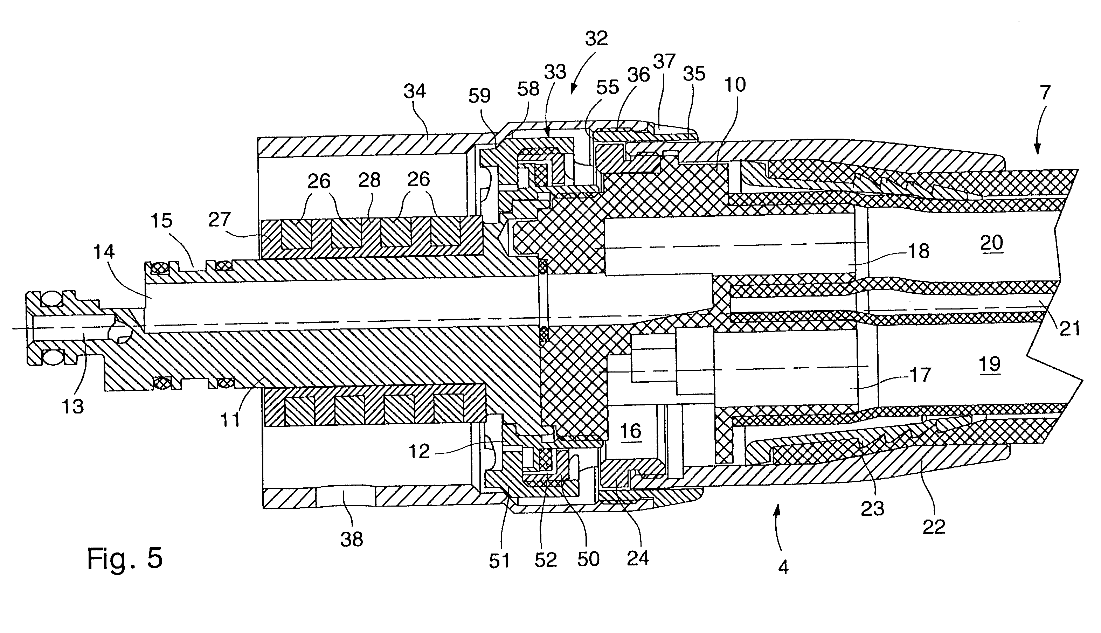

Le raccord tournant 1 est décrit ci-dessous plus en détail en référence aux figures 2 à 6. Comme on le voit en particulier dans la figure 5, la partie fixe 4 du raccord comporte un corps arrière 10 et un corps avant 11, fixé l'un à l'autre par emboîtement et par une bague filetée 12. Ces deux corps sont traversés par quatre canaux 13 à 16 pour des fluides, à savoir un canal 13 pour de l'eau de refroidissement de la zone de travail, un canal 14 pour de l'air comprimé susceptible d'entraîner une turbine à moteur pneumatique ou de refroidir un moteur électrique, un canal 15 pour de l'air comprimé destiné à être projeté sur la zone de travail, et un canal de retour d'air 16. A l'arrière du corps 10, ces quatre canaux débouchent dans quatre embouts tels que 17, 18 communiquant avec des conduits 19, 20 disposés de manière connue dans le tuyau flexible 7. Celui-ci contient en outre quatre conducteurs électriques 21, dont un seul est représenté. Le tuyau 7 est fixé au corps arrière 10 à l'aide de deux manchons coniques 22 et 23 et d'une bague filetée 24 qui appartiennent aussi à la partie fixe du raccord.

Un groupe de quatre bagues de contact électrique 26 est monté sur une partie cylindrique du corps avant 11 au moyen d'un support isolant 27, l'ensemble des bagues et du support ayant une surface périphérique cylindrique 28 destinée à s'ajuster dans un logement correspondant de l'instrument. Chaque bague 26 est raccordée électriquement, d'une manière non représentée, à l'un des conducteurs 21 du tuyau 7 pour être reliée, par exemple, à une source d'alimentation comportant trois phases et un pôle neutre.

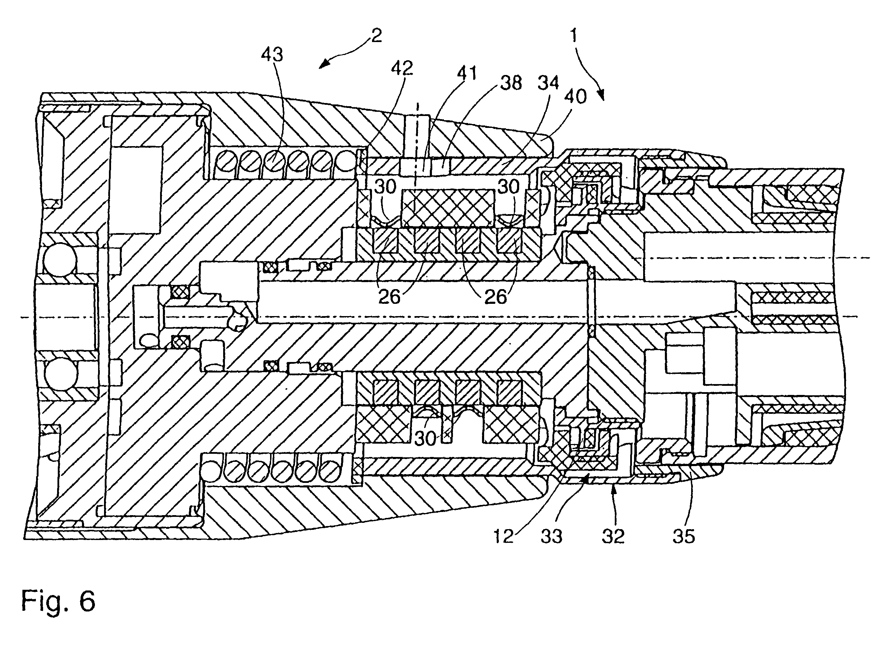

Comme le montre la figure 6, lorsque le raccord tournant 1 est connecté à l'extrémité arrière du moteur électrique 2 ou d'un autre instrument présentant à l'arrière une configuration analogue, la surface extérieure de chaque bague de contact 26 se trouvera en contact glissant avec un frotteur correspondant 30 formé par une lame élastique raccordée aux circuits internes du moteur et permettant aussi d'alimenter la pièce à main à travers le moteur, le cas échéant.

La partie rotative du raccord tournant comprend, comme on le voit mieux dans la figure 5, un manchon d'accouplement 32 et un anneau intermédiaire de butée 33 disposé entre le manchon 32 et la bague filetée 12 qui appartient à la partie fixe du raccord.

Le manchon d'accouplement 32 comprend une douille 34 sensiblement cylindrique et un écrou annulaire 35 fixé à l'arrière de la douille 34 par un filetage 36. Des creux 37 sont ménagés sur la surface extérieure de l'écrou 35 pour servir d'organe de préhension. La douille 34 s'étend vers l'avant sur une longueur suffisante pour entourer le groupe de bagues de contact 26, empêchant ainsi qu'elles puissent toucher un objet extérieur, par exemple les doigts de l'opérateur pendant qu'il procède à l'échange d'instruments sur le raccord. La douille 34 assure en outre le couplage mécanique entre le raccord et l'instrument, grâce à un dispositif à baïonnette comportant au moins deux encoches 38 (trois encoches dans le cas présent) en forme de J, qui sont mieux visibles dans la figure 2. La figure 6 montre que la douille 34 du manchon d'accouplement s'emboîte dans un embout arrière 40 du moteur électrique 2, pourvu d'ergots 41 qui s'engagent dans les encoches 38 de la douille pour fixer axialement le moteur au raccord. A l'intérieur de l'embout 40, une rondelle d'appui 42 poussée vers l'arrière par un ressort 43 assure le verrouillage des ergots 41 au fond des encoches 38 en forme de J.

On notera que l'écrou 35, et avec lui l'ensemble du manchon d'accouplement 32, peut non seulement tourner, mais aussi coulisser axialement le long de la surface extérieure cylindrique de l'élément 22 de la partie fixe du raccord 1.

L'anneau intermédiaire 33 servant de butée axiale pour le manchon d'accouplement 32 présente une section transversale en U et chevauche la bague fixe 12 avec un jeu axial. Il se compose de deux bagues filetées 50 et 51 vissées l'une dans l'autre. La bague fixe 12 porte une bague 52 en matériau antifriction, par exemple en PTFE, contre laquelle la bague intérieure 50 peut s'appuyer axialement en glissant. La bague antifriction 52 pourrait être remplacée par une butée à billes ou une butée d'un autre type. Dans la figure 3, on a représenté le raccord 1 sans la douille 34, qui est d'ailleurs amovible, et dans la figure 4 on a encore enlevé la bague 51, pour mieux voir les moyens de butée du manchon d'accouplement. La bague postérieure 50 comporte des ergots 54, ici au nombre de quatre, qui sont saillants vers l'extérieur et vers l'arrière et servent de butée pour l'extrémité avant 55 de l'écrou 35. Le conduit d'air 16 indiqué à la figure 5 passe entre les ergots 54 pour contourner la bague 50.

On notera aussi que la douille 34 présente un épaulement intérieur 58 destiné à buter contre une surface frontale 59 de la bague antérieure 51, pour empêcher que le manchon d'accouplement 32 puisse revenir trop loin en arrière lorsqu'il n'est pas couplé à un instrument, dans la situation représentée à la figure 4. La distance axiale entre l'épaulement 58 et l'extrémité 55 de l'écrou est assez grande pour ménager un jeu axial du manchon 32 sur l'anneau intermédiaire de butée 33. Quand le manchon 32 est couplé à un instrument, il est tiré vers l'avant et son épaulement 58 s'écarte de la bague 51. L'air circulant dans le canal 16 peut passer librement entre eux en toute circonstance grâce à des créneaux 60 (figure 3) ménagés dans la surface 59 de la bague 51.

Le moteur électrique 2 ou tout autre instrument emboîté sur le raccord rotatif est généralement poussé en avant par les fluides sous pression contenus dans un ou plusieurs des canaux 13 à 16. Il est retenu axialement par une force passant par le dispositif à baïonnette 38, 41, le manchon 32, la surface frontale 55 de l'écrou 35, l'anneau intermédiaire 33 et la bague antifriction 52 pour se transmettre à la partie fixe du raccord. En particulier, la pression de l'eau dans le canal 13 agit sur une face frontale 61 (figure 3) de la partie fixe du raccord, la pression de l'air comprimé dans le canal 14 agit sur une autre face frontale 62 de cette partie fixe, et la pression de l'air de retour dans le canal 16 agit aussi sur la partie fixe dans la région de l'anneau intermédiaire 33. Chacune de ces pressions repousse la partie fixe vers l'arrière. Cette poussée a pour effet de bloquer les ergots 41 dans les extrémités recourbées vers l'avant 62 des encoches 38 en forme de J (figure 2), ce qui augmente la force nécessaire pour ouvrir le dispositif de couplage à baïonnette et augmente par conséquent la sécurité de l'accouplement. Lorsque l'alimentation en fluide est arrêtée, ces pressions disparaissent et le découplage est ainsi facilité.

La construction décrite ci-dessus permet à l'opérateur de coupler et découpler aisément tout instrument tel que le moteur 2 sur le raccord 1, simplement en saisissant l'instrument d'une main et en faisant tourner le manchon d'accouplement 32 de l'autre main pour faire fonctionner le dispositif à baïonnette. Ainsi, le remplacement d'un instrument par un autre est extrêmement rapide. Grâce aux multiples possibilités d'alimentations différentes en électricité et en fluides qui sont offertes par le raccord selon l'invention, on peut lui raccorder directement des instruments dentaires très variés, utilisant une ou plusieurs des possibilités d'alimentation.

## Revendications

1. Raccord tournant (1) à connexion rapide pour relier un instrument dentaire (2) à une source d'alimentation, ledit raccord comportant :
- un tuyau (7) apte à être raccordé à la source d'alimentation et comportant des conducteurs électriques (21) et au moins un conduit de fluide (19, 20),
- une partie fixe (4) ayant une extrémité arrière raccordée au tuyau et une extrémité avant pourvue d'un groupe de bagues de contact électrique (26) raccordées aux dits conducteurs, lesdites bagues étant apparentes sur une surface périphérique (28) de la partie fixe pour permettre une liaison électrique par contact tournant avec l'instrument, ladite partie fixe étant traversée par un ensemble de canaux (13 à 16) pour faire communiquer le ou chaque conduit de fluide du tuyau avec l'instrument, et
- une partie rotative (5) tournant librement autour de la partie fixe (4) et comportant un manchon d'accouplement (32) pourvu d'un dispositif de couplage mécanique destiné à coopérer avec l'instrument,
**caractérisé en ce que** des moyens de butée (33, 54, 59), permettant au manchon d'accouplement (32) de s'appuyer axialement sur la partie fixe (4) de manière rotative pour tirer en arrière l'instrument contre le raccord, sont interposés entre ledit manchon et ladite partie fixe, et **en ce que** le manchon d'accouplement (32) s'étend vers l'avant sur une longueur suffisante pour entourer le groupe de bagues de contact (26) et empêcher un contact accidentel entre ces bagues et un objet extérieur lorsque le raccord n'est pas connecté à un instrument.

2. Raccord selon la revendication 1, **caractérisé en ce que** le dispositif de couplage mécanique est un dispositif à baïonnette (38).

3. Raccord selon la revendication 1 ou 2, **caractérisé en ce que** le manchon d'accouplement (32) présente un jeu axial par rapport aux moyens de butée.

4. Raccord selon l'une des revendications précédentes, **caractérisé en ce que** le manchon d'accouplement (32) comprend une douille amovible (34), entourant les bagues de contact et pourvue du dispositif de couplage mécanique à son extrémité avant, et un écrou annulaire (35) engagé par vissage dans une extrémité arrière de ladite douille et monté de manière rotative et coulissante sur ladite partie fixe.

5. Raccord selon la revendication 4, **caractérisé en ce que** la douille amovible (34) comporte un épaulement intérieur (58) agencé pour s'appuyer contre une surface frontale (59) avant des moyens de butée et **en ce que** l'écrou annulaire (35) est agencé pour s'appuyer contre une surface arrière des moyens de butée.

6. Raccord selon l'une des revendications précédentes, **caractérisé en ce que** les moyens de butée comportent un anneau intermédiaire (33) agencé pour s'appuyer axialement et de manière rotative contre ladite partie fixe et contre le manchon d'accouplement.

7. Raccord selon les revendications 5 et 6, **caractérisé en ce que** la dite surface arrière des moyens de butée est formée par des parties saillantes (54) de l'anneau intermédiaire (33) et **en ce qu'**un (16) desdits canaux, destiné à véhiculer de l'air en retour de l'instrument, passe entre l'anneau intermédiaire (33) et le manchon d'accouplement (32) et entre lesdites parties saillantes (54) pour atteindre la partie fixe du raccord.

8. Raccord selon la revendication 7, **caractérisé en ce que** ledit canal (16) destiné à véhiculer de l'air en retour passe par des créneaux (60) ménagés dans ladite surface frontale (59) des moyens de butée.

9. Raccord selon la revendication 6, **caractérisé en ce que** l'anneau intermédiaire (33) est monté avec un jeu axial sur la partie fixe et s'appuie axialement contre celle-ci par l'entremise d'une bague en matériau antifriction (52).

10. Raccord selon les revendications 2 et 3, **caractérisé en ce que** le dispositif à baïonnette comporte des encoches en forme de J (38), destinées à recevoir chacune un ergot (41) de l'instrument, et **en ce que** ledit ensemble de canaux comporte au moins un canal (13, 14) débouchant dans une face frontale (61, 62) à l'avant de la partie fixe et agencé pour transporter un fluide sous pression, de sorte que la pression du fluide tend à bloquer lesdits ergots dans lesdites encoches quand un instrument est connecté au raccord.

## Patentansprüche

1. Schnellverbindungs-Drehanschluss (1) zum Verbinden eines zahnärztlichen Instruments (2) mit einer Versorgungsquelle, wobei der Anschluss umfasst:
- einen Schlauch (7), der mit der Versorgungsquelle verbunden werden kann und elektrische Leiter (21) und wenigstens eine Fluidleitung (19, 20) aufweist,
- einen festen Teil (4), der ein mit dem Schlauch verbundenes hinteres Ende sowie ein vorderes Ende besitzt, das mit einer Gruppe von Ringen (26) für einen elektrischen Kontakt versehen ist, die mit den Leitern verbunden sind, wobei die Ringe auf einer Umfangsoberfläche (28) des festen Teils freiliegen, um durch Drehkontakt mit dem Instrument eine elektrische Verbindung zu ermöglichen, wobei durch den festen Teil eine Kanalgesamtheit (13 bis 16) verläuft, um eine Verbindung zwischen der oder jeder Fluidleitung des Schlauchs und dem Instrument herzustellen, und
- einen drehbaren Teil (5), der sich um den festen Teil (4) frei dreht und eine Kupplungsmuffe (32) aufweist, die mit einer mechanischen Kopplungsvorrichtung versehen ist, die dazu bestimmt ist, mit dem Instrument zusammenzuwirken,
**dadurch gekennzeichnet, dass** zwischen die Muffe und den festen Teil Anschlagmittel (33, 54, 59) eingefügt sind, die der Kupplungsmuffe (32) ermöglichen, sich auf dem festen Teil (4) axial und drehbar abzustützen, um das Instrument gegen den Anschluss nach hinten zu ziehen, und dass sich die Kupplungsmuffe (32) nach vorn über eine ausreichende Länge erstreckt, um die Gruppe von Kontaktringen (26) zu umgeben und um einen zufälligen Kontakt zwischen diesen Ringen und einem äußeren Gegenstand zu verhindern, wenn der Anschluss nicht mit einem Instrument verbunden ist.

2. Anschluss nach Anspruch 1, **dadurch gekennzeichnet, dass** die mechanische Kopplungsvorrichtung eine Bajonettverschlussvorrichtung (38) ist.

3. Anschluss nach Anspruch 1 oder 2, **dadurch gekennzeichnet, dass** die Kupplungsmuffe (32) in Bezug auf die Anschlagmittel ein axiales Spiel aufweist.

4. Anschluss nach einem der vorhergehenden Ansprüche, **dadurch gekennzeichnet, dass** die Kupplungsmuffe (32) eine abnehmbare Hülse (34), die die Kontaktringe umgibt und an ihrem vorderen Ende mit der mechanischen Kopplungsvorrichtung versehen ist, und eine Ringmutter (35), die durch Verschrauben in ein hinteres Ende der Hülse in Eingriff ist und am festen Teil in drehbarer und gleitender Weise angebracht ist, umfasst.

5. Anschluss nach Anspruch 4, **dadurch gekennzeichnet, dass** die abnehmbare Hülse (34) eine innere Schulter (58) umfasst, die so beschaffen ist, dass sie sich an einer vorderen Frontfläche (59) der Anschlagmittel abstützt, und dass die Ringmutter (35) so beschaffen ist, dass sie sich an einer hinteren Fläche der Anschlagmittel abstützt.

6. Anschluss nach einem der vorhergehenden Ansprüche, **dadurch gekennzeichnet, dass** die Anschlagmittel einen Zwischenring (33) umfassen, der so beschaffen ist, dass er sich axial und drehbar an dem festen Teil und an der Kupplungsmuffe abstützt.

7. Anschluss nach den Ansprüchen 5 und 6, **dadurch gekennzeichnet, dass** die hintere Fläche der Anschlagmittel durch vorstehende Teile (54) des Zwischenrings (33) gebildet ist und dass einer (16) der Kanäle, der dazu bestimmt ist, die Luft vom Instrument zurückzuführen, zwischen dem Zwischenring (33) und der Kupplungsmuffe (32) und zwischen den vorstehenden Teilen (54) verläuft, um den festen Teil des Anschlusses zu erreichen.

8. Anschluss nach Anspruch 7, **dadurch gekennzeichnet, dass** der Kanal (16), der dazu bestimmt ist, die Luft zurückzuleiten, durch Lücken (60) verläuft, die in der Frontfläche (59) der Anschlagmittel ausgespart sind.

9. Anschluss nach Anspruch 6, **dadurch gekennzeichnet, dass** der Zwischenring (33) mit einem axialen Spiel an dem festen Teil angebracht ist und sich unter Einfügung eines Rings (52) aus einem Antifriktionswerkstoff axial gegen diesen abstützt.

10. Anschluss nach den Ansprüchen 2 und 3, **dadurch gekennzeichnet, dass** die Bajonettverschluss-Vorrichtung J-förmige Nuten (38) aufweist, die dazu bestimmt sind, jeweils einen Zapfen (41) des Instruments aufzunehmen, und dass die Gesamtheit von Kanälen wenigstens einen Kanal (13, 14) aufweist, der in eine Frontfläche (61, 62) vor dem festen Teil mündet und so beschaffen ist, dass er ein mit Druck beaufschlagtes Fluid transportiert, so dass der Druck des Fluids bestrebt ist, die Zapfen in den Nuten zu blockieren, wenn mit dem Anschluss ein Instrument verbunden ist.

## Claims

1. Quick fit revolving connecting unit (1) for connecting a dental instrument (2) to a supply unit, said connecting unit including :
- a hose (7) able to be connected to the supply unit and including electric conductors (21) and at least one fluid conduit (19, 20),
- a fixed portion (4) having a rear end connected to the hose and a front end provided with a group of electric contact rings (26) connected to said conductors, said rings being exposed on a peripheral surface (28) of the fixed portion to allow an electric connection via revolving contact with the instrument, a set of channels (13 to 16) passing through said fixed portion to allow the or each fluid conduit of the hose to communicate with the instrument, and
- a rotating portion (5) rotating freely around the fixed portion (4) and including a coupling sleeve (32) provided with a mechanical coupling device intended to co-operate with the instrument,
**characterised in that** stop means (33, 54, 59), allowing the coupling sleeve (32) to rest axially on the fixed portion (4) in a rotatable manner to pull the instrument backwards against the connecting unit, are inserted between said sleeve and said fixed portion, and **in that** the coupling sleeve (32) extends forwards over a sufficient length to surround the group of contact rings (26) and to prevent accidental contact between said rings and an external object when the connecting unit is not connected to an instrument.

2. Connecting unit according to claim 1, **characterised in that** the mechanical coupling device is a bayonet device (38).

3. Connecting unit according to claim 1 or 2, **characterised in that** the coupling sleeve (32) has an axial play with respect to the stop means.

4. Connecting unit according to any of the preceding claims, **characterised in that** the coupling sleeve (32) includes a removable bush (34), surrounding the contact rings and provided with the mechanical coupling device at its front end, and an annular nut (35) engaged by screwing into a rear end of said bush and mounted so as to rotate and slide on said fixed portion.

5. Connecting unit according to claim 4, **characterised in that** the removable bush (34) has an inner shoulder (58) arranged to be able to abut against a frontal surface (59) of the stopping means and **in that** the annular nut (35) is arranged to abut against a rear surface of the stopping means.

6. Connecting unit according to any of the preceding claims, **characterised in that** the stopping means include an intermediate ring (33) arranged to abut axially and in a rotatable manner against said fixed portion and against the coupling sleeve.

7. Connecting unit according to claims 5 and 6, **characterised in that** said rear surface of the stopping means is formed by projecting portions (54) of the intermediate ring (33) and **in that** one (16) of said channels, intended to convey return air from the instrument, passes between the intermediate ring (33) and the coupling ring (32) and between said projecting portions (54) to reach the fixed portion of the connecting unit.

8. Connecting unit according to claim 7, **characterised in that** said channel (16) intended to convey return air passes through nicks (60) arranged in said frontal surface (59) of the stopping means.

9. Connecting unit according to claim 6, **characterised in that** the intermediate ring (33) is mounted with an axial play on the fixed portion and abuts it axially via a ring made of antifriction material (52).

10. Connecting unit according to claims 2 and 3, **characterised in that** the bayonet device includes J-shaped notches (38), each intended to accommodate a snug (41) of the instrument, and **in that** said set of channels includes at least a channel (13, 14) opening out into a frontal face (61, 62) at the front of the fixed portion and arranged to convey a fluid under pressure, so that the pressure of the fluid tends to block said snugs in said notches when an instrument is connected to the connecting unit.
